# EUROPÄISCHE PATENTSCHRIFT

(11) **EP 3 853 419 B1**
(45) Veröffentlichungstag und Bekanntmachung des Hinweises auf die Patenterteilung: **18.10.2023**
(21) Anmeldenummer: 18811459.9
(22) Anmeldetag: 16.11.2018
(51) Int. Cl.: E03C 1/05

(54) **ABLAUFSTEUERUNG FÜR ENTNAHMESTELLEN**
SEQUENCE CONTROLLER FOR EXTRACTION POINTS
COMMANDE SÉQUENTIELLE POUR POINTS DE PRÉLÈVEMENT

(43) Veröffentlichungstag der Anmeldung: 28.07.2021
(73) Patentinhaber: Viega Technology GmbH & Co. KG, 57439 Attendron (DE)
(72) Erfinder: OBRIST, Roland, 7412 Scharans (CH)
(74) Vertreter: Troesch Scheidegger Werner AG
(86) Internationale Anmeldenummer: PCT/EP2018/081531
(87) Internationale Veröffentlichungsnummer: WO 2020/098948

(56) Entgegenhaltungen:
- EP-A1- 2 910 694
- WO-A1-2011/094455
- US-A1- 2008 259 056
- US-A1- 2011 315 711

## Beschreibung

Die vorliegende Erfindung betrifft eine Ablaufsteuerung für Entnahmestellen. Unter einer Ablaufsteuerung ist eine Steuereinrichtung oder ein Steuerungssystem zu verstehen, das sequentielle Vorgänge an Vorrichtungen steuert. Als Vorrichtungen sind bei der vorliegenden Erfindung Entnahmestellen und damit zusammenhängende periphere Geräte gemeint. Unter Entnahmestellen sind im Rahmen der vorliegenden Erfindung Vorrichtungen zu verstehen, welche flüssige Medien abgeben, seien es Auslaufarmaturen wie Wasserhähne, oder Duschen, oder ein Badewannen-Wassereinlauf, oder Flüssigkeitsspender für diverse Flüssigkeiten wie Flüssigseife, Desinfektionsmittel und Körperpflegemittel.

Bei Entnahmestellen ist es für Benutzer wünschenswert geworden, dass statt einer reinen Handbedienung die Vorgänge vermehrt von einem Steuerungssystem gesteuert werden und der Benutzer dabei bevorzugt mittels einer Anzeige geführt wird, insbesondere wenn ein Ablauf mehrere Schritte hintereinander umfasst und eine bestimmte Abfolge und Zeitdauer der Schritte eingehalten werden soll. Ein solches Steuerungssystem dient dem Bedienungskomfort, hilft bei der Einsparung von Wasser und/oder Energie, und ist auch zweckdienlich für die Einhaltung von Hygienevorschriften.

Am Beispiel einer Handwaschvorrichtung ist in der EP 0 025 785 B1 eine Steueranlage beschrieben, welche den Ablauf der Schritte: Wasserabgabe zum Anfeuchten der Hände, Seifenabgabe, Pausenzeit zum Reiben der Hände, Wasser zum Abspülen sowie Warmluft aus dem Handtrockner steuert. Der Ablauf ist als Programm gespeichert.

In der EP 0 679 770 A2 ist ein Verfahren zum Betrieb einer Auslaufarmatur beschrieben, das eine bessere Anpassung an individuelle Bedürfnisse eines Benutzers ermöglicht, indem der Benutzer zunächst unter mehreren in einer Kontrolleinheit gespeicherten Ablaufprogrammen ein bestimmtes, von ihm gewünschtes Ablaufprogramm wählen kann, das zur Anzeige gebracht und gestartet wird.

Eine Steuereinrichtung zur Steuerung des Wasserverbrauchs beim Duschen ist in der DE 10 2004 052 793 B4 beschrieben. Die individuelle Anpassbarkeit wird dadurch unterstützt, dass die Steuereinrichtung programmierbar ausgebildet ist. Zudem wird eine als LCD-Display ausgebildete Anzeige vorgeschlagen. Individuelle Änderungen des Ablaufprogramms sind einerseits mit dem Startknopf möglich (Zusatzduschzeit oder Unterbrechungen), oder mit Programmierknöpfen. Eine Eingabe über ein optionales Bedienfeld würde mit Codes erfolgen.

Die WO 2011 094455, sowie die EP 2 910 694 offenbaren eine programmierbare Duschen-Benutzeroberfläche, welche über ein Bedienfeld verfügt. Das Bedienfeld umfasst einen Bildschirm mit dargestellten Drucktasten und einen Rahmen mit physischen Drucktasten, mit welchen sich einzelne Duschenelemente ein- oder ausschalten lassen oder mit welchen deren Parameter verändert werden können.

Die aus dem Stand der Technik bekannten Ablaufsteuerungen für Entnahmestellen bzw. die Ablaufprogramme sind nicht sehr flexibel. Für den Benutzer sind höchstens einfache Änderungen des Ablaufs möglich. Änderungen eines Ablaufprogramms oder die Erstellung eines neuen Ablaufprogramms haben bisher einen Fachmann mit Kenntnissen der Programmiersprache und der Programm-Codes erfordert.

Aufgabe der vorliegenden Erfindung ist es, eine alternative Ablaufsteuerung für Entnahmestellen zur Verfügung zu stellen, deren Ablaufprogramme einfach zu konfigurieren und zu editieren sind.

Diese Aufgabe wird durch eine programmierbare Ablaufsteuerung für Entnahmestellen mit den Merkmalen des Anspruchs 1 gelöst. Ein Ablauf kann dabei synonym auch als Szene bezeichnet werden.

Die Erfindung umfasst zudem ein Verfahren zum Konfigurieren einer solchen Ablaufsteuerung, sowie Verwendungen der erfindungsgemässen programmierbaren Ablaufsteuerung bei Entnahmestellen.

Bevorzugte erfindungsgemässe Ausführungsformen und Varianten ergeben sich aus den jeweils abhängigen Ansprüchen.

Eine programmierbare Ablaufsteuerung für Entnahmestellen und damit zusammenhängende periphere Geräte zur Steuerung von Abläufen mit einzelnen Ablaufschritten mit gesteuerter und/oder geregelter Abgabe von flüssigen Medien umfasst eine Kontrolleinheit zur Datenverarbeitung und zur Speicherung und Ausführung von wählbaren Ablaufprogrammen, mit einer Anzeige und einer Ablaufprogramm-Wahlmöglichkeit und einem Bedienfeld für Eingaben, sowie Schnittstellen für Sensoren und Schnittstellen zur Ansteuerung von mit der Kontrolleinheit verbindbaren Stellgliedern, und ist dadurch gekennzeichnet, dass die Ablaufsteuerung zum Konfigurieren und Editieren der wählbaren Ablaufprogramme eine modulare Programmieroberfläche mit Modulkästchen für die einzelnen Ablaufschritte aufweist, in welche über das Bedienfeld Einstellungen und Kriterien für die betreffende Entnahmestelle und damit zusammenhängende periphere Geräte sowie gewünschte Eigenschaften des abzugebenden flüssigen Mediums oder Pausen bei der Abgabe zu jedem Ablaufschritt in ein entsprechendes Modulkästchen eingegeben und die Ablaufschritte in Form der entsprechenden Modulkästchen zu einem Ablaufprogramm für den Ablauf aneinandergereiht werden können.

Bei einer erfindungsgemässen programmierbaren Ablaufsteuerung handelt es sich bei den Entnahmestellen bevorzugt um Wasser-Entnahmestellen.

Die Ablaufprogramm-Wahlmöglichkeit zur Auswahl des gewünschten Ablaufprogramms unter den verfügbaren gespeicherten Ablaufprogrammen ist bei der erfindungsgemässen programmierbaren Ablaufsteuerung durch einen drehbaren Wahlschalter mit Startfunktion verkörpert, oder sie umfasst eine akustische Wahlmöglichkeit. Letztere Möglichkeit würde ein Mikrofon und eine Spracherkennungssoftware mit Sprachsteuerung beinhalten. Bei einer Beeinträchtigung des Sehvermögens, oder wenn z.B. aus hygienischen Gründen nichts berührt werden soll, könnten so die betroffenen Personen mit ihrer Stimme die gewünschte Wahl an die Ablaufsteuerung übermitteln.

Die Anzeige der erfindungsgemässen programmierbaren Ablaufsteuerung ist dazu ausgelegt, zunächst Titel von wählbaren Ablaufprogrammen akustisch anzuzeigen, und nach dem Start eines gewählten Ablaufprogramms den jeweiligen Ablaufschritt mit entsprechendem Titel akustisch anzuzeigen. Durch die Anzeige des Titels des jeweiligen Ablaufschritts weiss der Benutzer zu jeder Zeit, wo im Ablauf er sich befindet. Eine akustische Anzeige (über Lautsprecher) kann den gesprochenen Titel des jeweiligen Ablaufschritts umfassen, und optional z.B. durch eine Hintergrundmusik untermalt sein. Die Anzeige (optisch und/oder akustisch), die Ablaufprogramm-Wahlmöglichkeit und das Bedienfeld können aber auch als separate Komponenten ausgebildet sein.

In einer Ausführungsform der erfindungsgemässen programmierbaren Ablaufsteuerung handelt es sich bei den Sensoren, die an Schnittstellen der Kontrolleinheit anschliessbar sind, um Drucksensoren, Temperatursensoren oder Durchfluss-Sensoren in Zulaufleitungen, oder um Näherungssensoren. Ein Temperatursensor kann Teil eines Regelkreises sein, um das abzugebende flüssige Medium auf eine in einem Modulkästchen spezifizierte Solltemperatur zu regeln, bzw. um es auf eine vorgegebene Temperatur aufzuheizen. Mit einem Durchfluss-Sensor kann auf eine gewünschte Durchflussrate geregelt oder nach Erreichen einer bestimmten total durchgeflossenen Medium-Menge (z.B. in Litern) ein Ventil in einer Zulaufleitung geschlossen werden. Ein Näherungssensor kann unter anderem dazu dienen, einen Ablauf bzw. eine Szene berührungslos bei einer Annäherung eines Benutzers auszulösen.

Bei der erfindungsgemässen programmierbaren Ablaufsteuerung handelt es sich denn auch bei den Stellgliedern, die mit Schnittstellen der Kontrolleinheit zur Ansteuerung verbindbar sind, insbesondere um Stellglieder von Ventilen oder um Schalter von Pumpen in Zulaufleitungen, oder um Schalter von peripheren Geräten. Ein peripheres Gerät ist z.B. ein elektromechanisch betätigter Badewannenstöpsel, oder ein Seifenspender neben einer Wasserarmatur, oder ein Warmlufthandtrockner.

Bei den über Stellglieder ansteuerbaren Ventilen handelt es sich insbesondere um Absperrventile, Steuerventile, Stromregelventile oder Mischventile, wobei Mischventile bevorzugt auf eine in einem Modulkästchen spezifizierte Solltemperatur des flüssigen Mediums regelbar sind.

Die vorliegende Erfindung umfasst auch ein Verfahren zum Konfigurieren einer erfindungsgemässen programmierbaren Ablaufsteuerung, das dadurch gekennzeichnet ist, dass beim Konfigurieren eines Ablaufprogramms in der modularen Programmieroberfläche so viele Modulkästchen jeweils eines nach dem anderen aus einer Vorlage erstellt, mit Parametern definiert und aneinandergereiht werden, wie zeitlich oder nach anderen Kriterien unterteilte Ablaufschritte zum Abbilden eines vollständigen Ablaufs erforderlich sind. Eine Vorlage ist ein neutrales Modulkästchen zum Parametrieren. Dieses kann für verschiedene Szenen-Arten unterschiedlich detailliert sein. Jedes erstellte Modulkästchen entspricht einem Schritt im unterteilten Ablauf, wobei die Kriterien zur Unterteilung entweder eine definierte Zeitdauer eines Schritts (z.B. die Dauer einer Wasserabgabe oder eine Pausendauer ohne Wasserabgabe), oder das Erreichen eines bestimmten physikalischen Eigenschafts-Wertes des abzugebenden Mediums sind, z.B. eine Temperaturerreichung in einem Aufheizschritt oder das Erreichen einer bestimmten abgegebenen Medium-Menge (in Volumeneinheiten).

Das Verfahren ist in einer Variante dadurch gekennzeichnet, dass die Vorlage für die einzelnen Modulkästchen ein Kopfteil und ein Parameterfeld umfasst, und in den einzelnen erstellten Modulkästchen im Kopfteil ein Titel zum jeweiligen Ablaufschritt eingetragen wird, und im Parameterfeld die zur Definierung und Steuerung des jeweiligen Ablaufschritts notwendigen Parameter ausgewählt und spezifiziert werden.

Die vorliegende Erfindung bezieht sich zudem auf die Verwendung einer erfindungsgemässen programmierbaren Ablaufsteuerung für die Steuerung von Abläufen oder Szenen mit aufeinanderfolgenden Ablaufschritten bei Entnahmestellen, bevorzugt für Wasser-Entnahmestellen und damit zusammenhängende Vorgänge in deren Umgebung. Zusammenhängende Vorgänge können nicht nur periphere Geräte betreffen, sondern auch Hinweise auf der optischen und/oder akustischen Anzeige an den Benutzer zum Ausführen gewisser Handlungen während der Ablaufschritte sein, beispielsweise Aufforderungen wie «Hände netzen», «Einseifen» und «Abspülen».

Bei der Verwendung sind die Abläufe oder Szenen bevorzugt ausgewählt aus der Gruppe bestehend aus Zähneputzen, Duschen, Baden, Händewaschen und Handhygiene-Prozeduren. Letzteres ist eine Schwerpunktanwendung der vorliegenden Erfindung, vor allem für Krankenhäuser oder Arztpraxen. Alle Hygienevorschriften (z.B. für das Reinigen und Desinfizieren der Hände vor einer Operation) sind mit der vorliegenden Erfindung individuell abbildbar und einfach konfigurierbar. Die Führung eines Benutzers durch eine Handhygiene-Prozedur mittels der erfindungsgemässen Ablaufsteuerung ist eine grosse Hilfe zum Einhalten der Hygienevorschriften. Weitere vorteilhafte Aspekte betreffen die Bereiche Komfort und Wellness, das Sparen von Wasser und Energie sowie die berührungslose (akustische) Wahlmöglichkeit eines Ablaufprogramms.

Im Folgenden wird die Erfindung anhand von schematischen Figuren näher erläutert, die Beispiele für mögliche Abläufe oder Szenen in einer erfindungsgemässen modularen Programmieroberfläche der Ablaufsteuerung darstellen, ohne den Umfang der vorliegenden Erfindung einzuschränken. Dabei zeigt:
- Fig. 1: eine Szene neutral
- Fig. 2: Szene Handhygiene
- Fig. 3: Szene Zähneputzen
- Fig. 4: Szene Bad Petra
- Fig. 5: Szene Dusche Alex

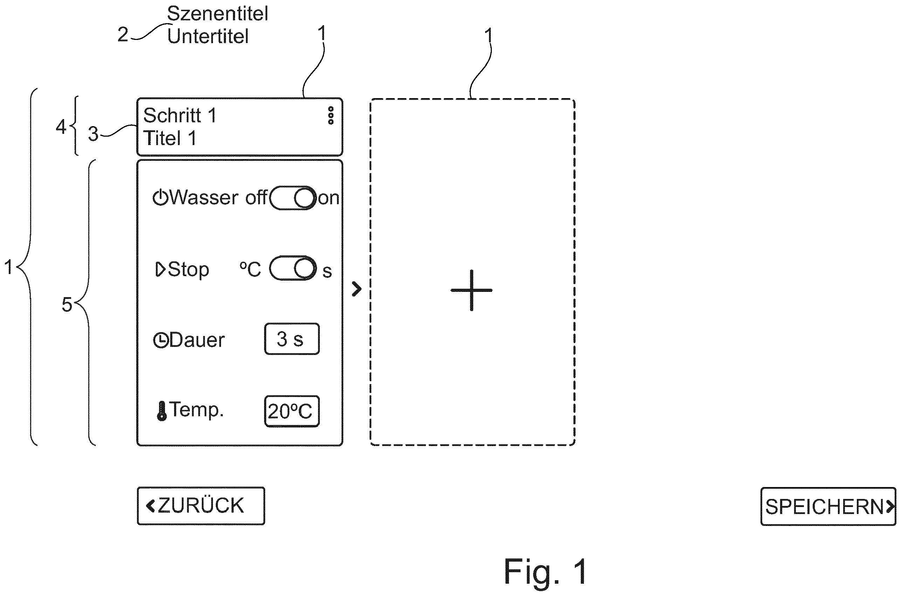

Die Figur 1 zeigt eine erfindungsgemässe modulare Programmieroberfläche mit einer neutralen Szene, deren Ablaufprogramm noch nicht betitelt ist und deren Modulkästchen 1 eine Vorlage zum schrittweisen Definieren eines Ablaufs an einer Entnahmestelle darstellt. An der Stelle des Szenentitels 2 kann der Titel eines konkreten Ablaufprogramms eingesetzt werden, unter welchem ein Ablaufprogramm gespeichert werden kann. Ein Modulkästchen 1 umfasst ein Kopfteil 4, in welches zum jeweiligen (Ablauf-)Schritt ein Titel 3 des betreffenden Ablaufschritts eingetragen wird. Zudem umfasst ein Modulkästchen 1 ein Parameterfeld 5, in welchem die Parameter zur Definierung und Steuerung des jeweiligen Ablaufschritts ausgewählt und spezifiziert werden. Je nach Szenen-Art wird im Parameterfeld 5, das unterschiedlich detailliert sein kann, eine entsprechende Anzahl Parameter definiert. Das Parameterfeld 5 von Fig. 1 zeigt die vier Haupt-Parameter für den Ablauf an einer Wasser-Entnahmestelle, nämlich:
- Wasser aus oder ein (off/on) (mit virtuellem Schalter, der über eine Kontrolleinheit ein entsprechendes Ventil ansteuert, einstellbar für jeden Ablaufschritt);
- Stopp-Kriterium für den jeweiligen Ablaufschritt (hier entweder Erreichen einer Temperatur [°C] oder eine Zeitdauer [s], mit virtuellem Schalter wählbar);
- Eine definierte Zeitdauer für den jeweiligen Schritt [s];
- Eine Temperatur für das austretende Wasser [°C].

Die Parameter können, wie links im Parameterfeld 5 dargestellt, durch entsprechende Piktogramme bzw. Icons symbolisiert sein. Im Beispiel des Parameterfeldes 5 von Fig. 1 bedeuten die gezeigten Parametereinstellungen, dass im ersten Ablaufschritt das Wasser fliessen soll, also eingeschaltet sein soll, und zwar für eine Zeitdauer von 3 Sekunden, und dann das Ventil schliessen soll. Das ausfliessende Wasser soll eine Temperatur von 20 °C aufweisen, d.h. im Zulauf mit entsprechenden peripheren Geräten bzw. Mischventilen auf diese Solltemperatur geregelt bzw. gemischt werden. Zur Definierung eines zweiten Ablaufschritts kann ein nächstes Kästchen durch Anklicken des gestrichelt umrandeten Modulkästchens 1 mit dem Plus-Zeichen angefügt und in analoger Weise parametriert werden.

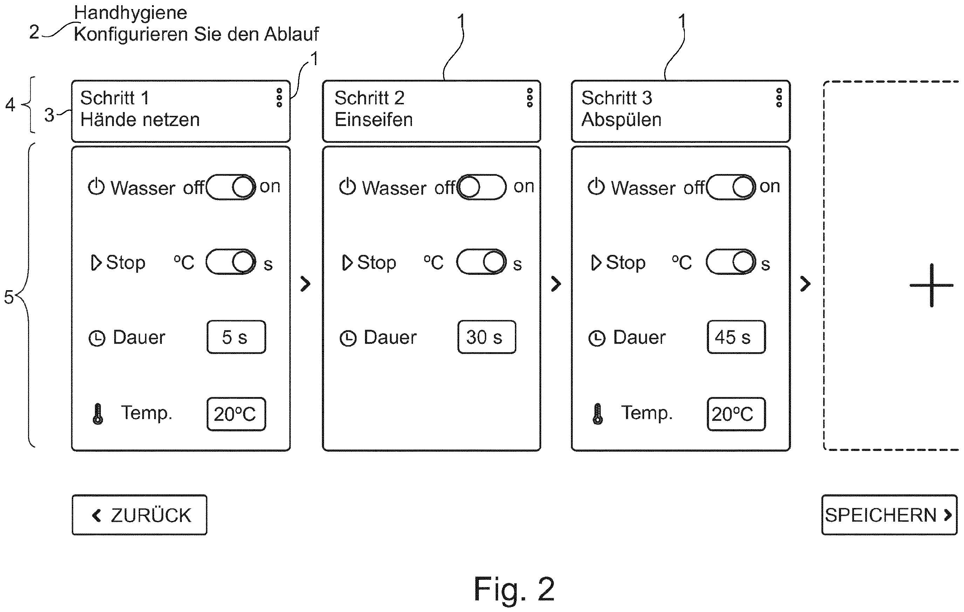

In der Figur 2 wurde die Vorlage aus Figur 1 dazu benutzt, um einen einfachen Handhygiene-Ablauf beispielhaft darzustellen. Dieses Ablaufprogramm mit dem Szenentitel 2 «Handhygiene» umfasst drei Schritte mit drei aufeinanderfolgenden Modulkästchen 1. Im Kopfteil 4 der Modulkästchen 1 wurden den jeweiligen Ablaufschritten die Titel 3 «Hände netzen», «Einseifen» und «Abspülen» gegeben, welche Information und Aufforderung zugleich an den Benutzer sind. Nach dem Start dieses Ablaufprogramms fliesst zunächst während 5 Sekunden Wasser mit einer Temperatur von 20 °C. Der Benutzer kann während dieser Zeit seine Hände netzen, d.h. nass machen. Im darauffolgenden zweiten Schritt ist eine 30 Sekunden lang dauernde Pause definiert, in welcher das Wasser abgestellt ist und der Benutzer seine Hände einseifen kann. Im zweiten Modulkästchen 1 erübrigt sich die Spezifizierung einer Temperatur, weil kein Wasser austritt. Im dritten und letzten Schritt des Ablaufprogramms von Fig. 2 schaltet sich das Wasser wieder ein, und zwar 45 Sekunden lang bei einer Wassertemperatur von 20 °C. Diese Zeit steht dem Benutzer zur Verfügung, um seine Hände abzuspülen. Dann ist dieses Ablaufprogramm zu Ende, und das Wasser wird durch die Ablaufsteuerung abgestellt.

Anhand der Figur 2 ist ersichtlich, auf welch einfache Weise ein Ablauf mit der modularen Programmieroberfläche der erfindungsgemässen Ablaufsteuerung konfigurierbar ist. Es können auf übersichtliche Weise so viele Modulkästchen 1 erstellt, mit Parametern definiert und aneinandergereiht werden, wie für das Abbilden des gewünschten Ablaufs nötig sind. Auch das Editieren von gespeicherten Ablaufprogrammen, z.B. das Anpassen von einzelnen Parametern, geht genau gleich elegant vonstatten. Andererseits kann mit den Pausenzeiten und Zeitbegrenzungen für die Wasserentnahme der Wasserverbrauch reduziert werden, ohne dass jemand einen Wasserhahn berühren muss.

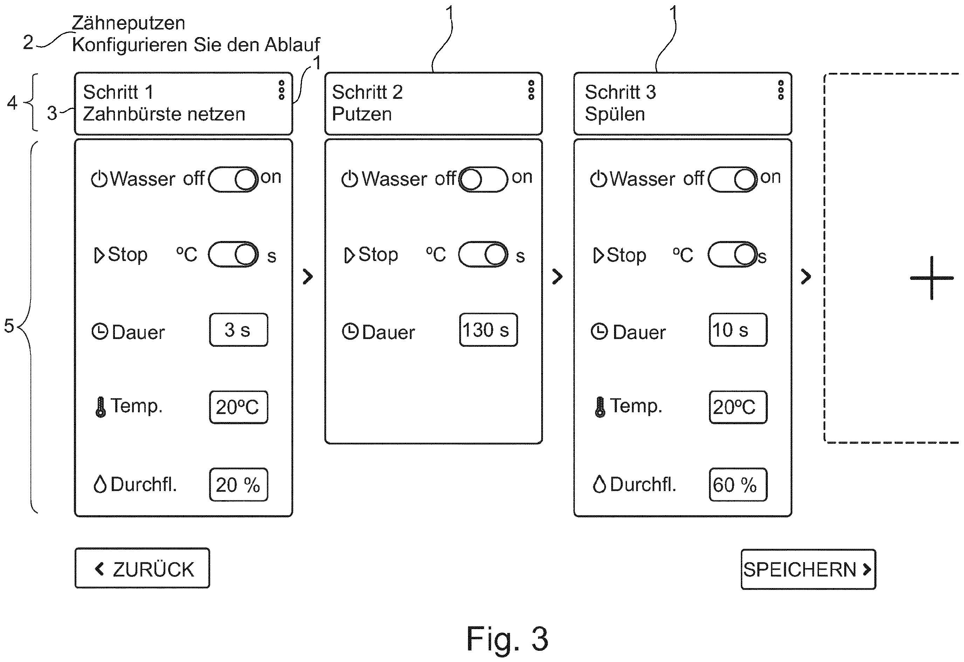

Die Figur 3 zeigt ein zu Figur 2 analoges Ablaufprogramm mit dem Szenentitel 2 «Zähneputzen». Hier ist in drei Modulkästchen 1 gemäss den Ablaufschritt-Titeln 3 definiert, dass zunächst die (mit Zahnpasta versehene) Zahnbürste genetzt werden soll. Dafür steht an einem Wasserhahn während 3 Sekunden Wasser von 20 °C Temperatur zur Verfügung. Weil dafür eine stark reduzierte Ausflussmenge genügt, kann im Parameterfeld 5 ein zusätzlicher Durchfluss-Parameter gemäss gezeigtem Beispiel als 20 % des maximal möglichen Durchflusses spezifiziert werden. Der zweite Ablaufschritt ist als 130 Sekunden lange Pausenzeit (ohne Wasser) zum «Putzen» (Titel 3 des zweiten Schritts) der Zähne vorgesehen. In diesem zweiten Modulkästchen 1 muss weder eine Temperatur noch eine Durchflussrate spezifiziert werden, da ja kein Wasser ausfliesst. Im dritten Modulkästchen 1 mit dem Ablaufschritt-Titel 3 «Spülen» im Kopfteil 4 schliesslich ist im Parameterfeld 5 spezifiziert, dass während 10 Sekunden Wasser mit einer Temperatur von 20 °C und einer Durchflussrate von 60 % fliessen soll. In diesem Zeitintervall kann der Benutzer den Mund spülen und die Zahnbürste abspülen. Die Durchflussrate wird dabei mittels eines Durchfluss-Sensors und einem über ein Stellglied ansteuerbaren Stromregelventil in der Zulaufleitung, die beide mit der Kontrolleinheit verbunden sind, entsprechend gesteuert bzw. geregelt.

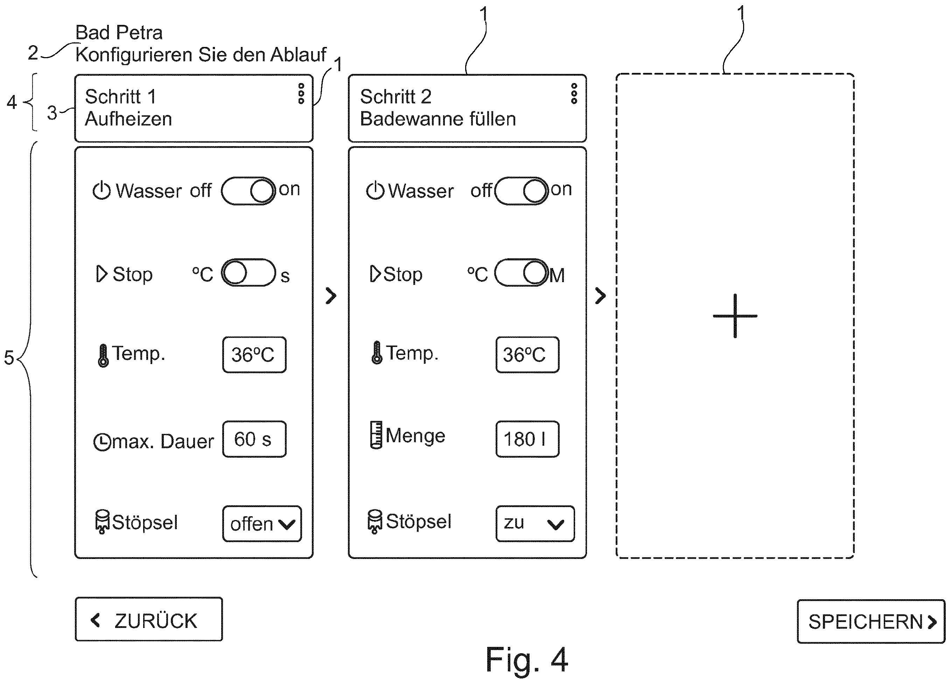

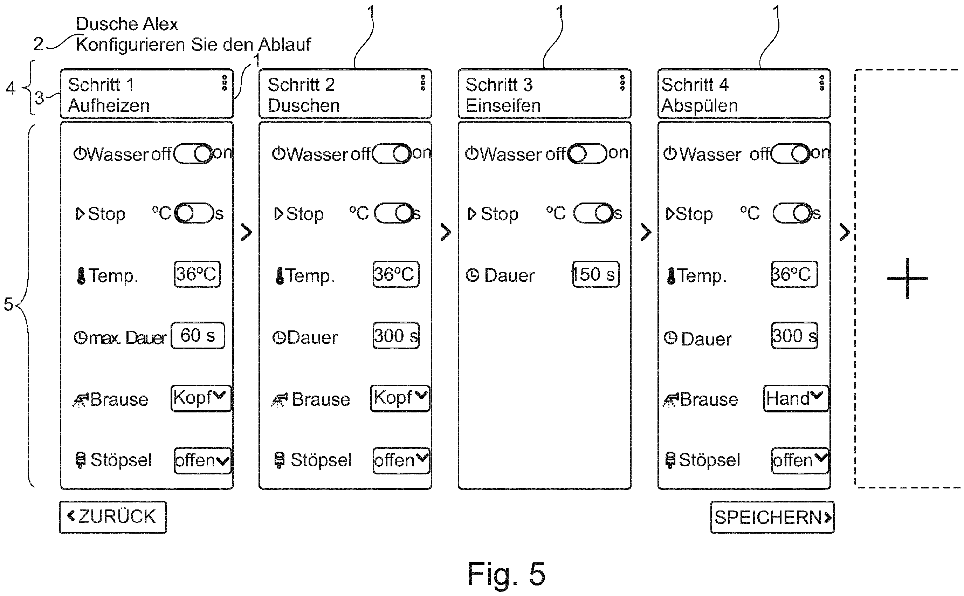

Der Gegenstand der Erfindung bezieht sich, wie aus der Beschreibung und den Ansprüchen hervorgeht, auf eine Ablaufsteuerung, welche erfindungsgemäss durch eine modulare Programmieroberfläche mit Modulkästchen 1 für einzelne Ablaufschritte die Möglichkeit bietet, auf einfache Art Abläufe zu konfigurieren, wie sie anhand der Figuren 2 und 3 beispielhaft erläutert wurden. Zwei weitere Beispiele werden in den Figuren 4 und 5 gezeigt.

Figur 4 ist ein Beispiel dafür, dass das Stopp-Kriterium für einen Ablaufschritt nicht immer eine Zeitdauer sein muss. Das Ablaufprogramm von Figur 4 hat den Szenentitel 2 «Bad Petra». Es geht hier um das automatisierte Vorbereiten einer Badewanne für ein Bad. Im Parameterfeld 5 der Modulkästchen 1 können für diese Szenen-Art zusätzliche Parameter definiert werden. Der unterste Parameter ist anwendbar, wenn die Badewanne eine ansteuerbare elektromechanische Stelleinrichtung für die Betätigung des Badewannenstöpsels aufweist. Gemäss Titel 3 des ersten Ablaufschritts wird zunächst bei offenem Stöpsel das einströmende Wasser aufgeheizt, bis es das Stopp-Kriterium einer Temperatur von 36 °C erreicht hat, oder bis zu einer maximalen Dauer von 60 Sekunden, falls bis dahin die 36 °C noch nicht erreicht worden wären. Dann folgt der zweite Ablaufschritt mit dem Titel 3 «Badewanne füllen». Beim Umschalten auf den zweiten Schritt wird der Stöpsel geschlossen, und Wasser mit geregelter Temperatur von 36 °C läuft ein. Das Stopp-Kriterium für den zweiten Ablaufschritt ist die während des zweiten Schritts total in die Badewanne eingelaufene Wasser-Menge, im gezeigten Beispiel 180 Liter. Dann schliesst ein Ventil in der Wasser-Zulaufleitung, und das Bad ist bereit. Als Fortsetzung wäre denkbar, dass in einem nächsten Schritt eine Pausenzeit (als Badezeit) von z.B. 15 Minuten definiert wird, und anschliessend der Badewannenstöpsel automatisch geöffnet wird zum Ablassen des Badewassers.

Figur 5 zeigt unter dem Szenentitel 2 «Dusche Alex» ein Beispiel für ein Ablaufprogramm in einer modernen Dusche. Diese Dusche verfügt sowohl über eine Kopfbrause als auch über eine Handbrause, welche beide über die Ablaufsteuerung aktiviert werden können, sowie über einen elektromechanisch verstellbaren Ablaufstöpsel. Aufgrund der Titel 3 der einzelnen Ablaufschritte und der gezeigten Parametereinstellungen ist der Ablauf nach den Erläuterungen zu den vorangegangenen Figuren selbsterklärend. Zum Parameter der Brause kann gesagt werden, dass im Drop-down-Menü dieses Parameters nicht nur entweder «Kopf» oder «Hand» gewählt werden kann, sondern als dritte Möglichkeit auch «Kopf und Hand» gleichzeitig, wenn man rundum abduschen möchte.

An dieser Stelle soll darauf hingewiesen werden, dass beliebige Kombinationen der beschriebenen und/oder in den Figuren gezeigten Merkmale zum Umfang der vorliegenden Erfindung gehören, solange die Kombinationen nicht inkonsistent sind.

Wie der Beschreibung und den Erläuterungen zu den Figuren zu entnehmen ist, wird mit der vorliegenden Erfindung eine vorteilhafte und einfach zu bedienende alternative Lösung für eine Ablaufsteuerung für Entnahmestellen zur Verfügung gestellt. Deren modulare Programmieroberfläche, in welcher sich die einzelnen Ablaufschritte bequem als entsprechende Module definieren und aneinanderreihen lassen, ermöglicht eine hohe individuelle Flexibilität und einfach zu konfigurierende personalisierte Abläufe, und dies auch ohne Detailkenntnisse der Programmiersprache.

### Bezugszeichenliste

Gleiche Bezugszeichen in den Figuren deuten auf entsprechende Merkmale hin, auch wenn in der Beschreibung der einzelnen Figuren nicht in jedem Fall ausdrücklich darauf Bezug genommen wird.
- 1: Modulkästchen
- 2: Titel des Ablaufprogramms (Szenentitel)
- 3: Titel des jeweiligen Ablaufschritts
- 4: Kopfteil des Modulkästchens 1
- 5: Parameterfeld des Modulkästchens 1

## Patentansprüche

1. Programmierbare Ablaufsteuerung für Entnahmestellen und damit zusammenhängende periphere Geräte zur Steuerung von Abläufen mit einzelnen Ablaufschritten mit gesteuerter und/oder geregelter Abgabe von flüssigen Medien, umfassend eine Kontrolleinheit zur Datenverarbeitung und zur Speicherung und Ausführung von wählbaren Ablaufprogrammen, mit einer Anzeige und einer Ablaufprogramm-Wahlmöglichkeit und einem Bedienfeld für Eingaben, sowie Schnittstellen für Sensoren und Schnittstellen zur Ansteuerung von mit der Kontrolleinheit verbindbaren Stellgliedern, wobei die Ablaufsteuerung zum Konfigurieren und Editieren der wählbaren Ablaufprogramme eine modulare Programmieroberfläche mit Modulkästchen (1) für die einzelnen Ablaufschritte aufweist, in welche über das Bedienfeld Einstellungen und Kriterien für die betreffende Entnahmestelle und damit zusammenhängende periphere Geräte sowie gewünschte Eigenschaften des abzugebenden flüssigen Mediums oder Pausen bei der Abgabe zu jedem Ablaufschritt in ein entsprechendes Modulkästchen (1) eingegeben und die Ablaufschritte in Form der entsprechenden Modulkästchen (1) zu einem Ablaufprogramm für den Ablauf aneinandergereiht werden können, **dadurch gekennzeichnet, dass** die Ablaufprogramm-Wahlmöglichkeit durch einen drehbaren Wahlschalter mit Startfunktion verkörpert ist, oder eine akustische Wahlmöglichkeit umfasst.

2. Programmierbare Ablaufsteuerung nach Anspruch 1, **dadurch gekennzeichnet, dass** es sich bei den Entnahmestellen um Wasser-Entnahmestellen handelt.

3. Programmierbare Ablaufsteuerung nach einem der vorhergehenden Ansprüche, **dadurch gekennzeichnet, dass** die Anzeige dazu ausgelegt ist, zunächst Titel (2) von wählbaren Ablaufprogrammen optisch und/oder akustisch anzuzeigen, und nach dem Start eines gewählten Ablaufprogramms den jeweiligen Ablaufschritt mit entsprechendem Titel (3) optisch und/oder akustisch anzuzeigen.

4. Programmierbare Ablaufsteuerung nach einem der vorhergehenden Ansprüche, **dadurch gekennzeichnet, dass** das Bedienfeld für Eingaben sowie für das Konfigurieren und Editieren der wählbaren Ablaufprogramme ein Bildschirm mit Berührungseingabe ist.

5. Programmierbare Ablaufsteuerung nach einem der vorhergehenden Ansprüche, **dadurch gekennzeichnet, dass** es sich bei den Sensoren, die an Schnittstellen der Kontrolleinheit anschliessbar sind, um Drucksensoren, Temperatursensoren oder Durchfluss-Sensoren in Zulaufleitungen oder um Näherungssensoren handelt.

6. Programmierbare Ablaufsteuerung nach einem der vorhergehenden Ansprüche, **dadurch gekennzeichnet, dass** es sich bei den Stellgliedern, die mit Schnittstellen der Kontrolleinheit zur Ansteuerung verbindbar sind, um Stellglieder von Ventilen oder um Schalter von Pumpen in Zulaufleitungen, oder um Schalter von peripheren Geräten handelt.

7. Programmierbare Ablaufsteuerung nach Anspruch 6, **dadurch gekennzeichnet, dass** es sich bei den Ventilen um Absperrventile, Steuerventile, Stromregelventile oder Mischventile handelt, wobei Mischventile bevorzugt auf eine in einem Modulkästchen spezifizierte Solltemperatur des flüssigen Mediums regelbar sind.

8. Verfahren zum Konfigurieren einer programmierbaren Ablaufsteuerung nach einem der Ansprüche 1 bis 7, **dadurch gekennzeichnet, dass** beim Konfigurieren eines Ablaufprogramms in der modularen Programmieroberfläche so viele Modulkästchen (1) jeweils eines nach dem anderen aus einer Vorlage erstellt, mit Parametern definiert und aneinandergereiht werden, wie zeitlich oder nach anderen Kriterien unterteilte Ablaufschritte zum Abbilden eines vollständigen Ablaufs erforderlich sind.

9. Verfahren nach Anspruch 8, **dadurch gekennzeichnet, dass** die Vorlage für die einzelnen Modulkästchen (1) ein Kopfteil (4) und ein Parameterfeld (5) umfasst, und in den einzelnen erstellten Modulkästchen (1) im Kopfteil (4) ein Titel (3) zum jeweiligen Ablaufschritt eingetragen wird, und im Parameterfeld (5) die zur Definierung und Steuerung des jeweiligen Ablaufschritts notwendigen Parameter ausgewählt und spezifiziert werden.

10. Verwendung einer programmierbaren Ablaufsteuerung nach einem der Ansprüche 1 bis 7 für die Steuerung von Abläufen oder Szenen mit aufeinanderfolgenden Ablaufschritten bei Entnahmestellen, bevorzugt für Wasser-Entnahmestellen und damit zusammenhängende Vorgänge in deren Umgebung.

11. Verwendung nach Anspruch 10, **dadurch gekennzeichnet, dass** die Abläufe oder Szenen ausgewählt sind aus der Gruppe bestehend aus Zähneputzen, Duschen, Baden, Händewaschen und Handhygiene-Prozeduren.

## Claims

1. Programmable sequence controller for tapping points and peripheral devices associated therewith for controlling sequences with individual sequence steps with controlled and/or regulated delivery of liquid media, comprising a control unit for data processing and for storing and executing selectable sequence programs, with a display and a sequence program selection option and a control panel for inputs, as well as interfaces for sensors and interfaces for controlling actuators which can be connected to the control unit, the sequence controller having a modular programming interface with module boxes (1) for the individual sequence steps for configuring and editing the selectable sequence programs, in which, via the control panel, settings and criteria for the relevant tapping point and peripheral devices associated therewith, as well as desired properties of the liquid medium to be dispensed or pauses during dispensing, can be entered for each sequence step in a corresponding module box (1) and the sequence steps can be lined up in the form of the corresponding module boxes (1) to form a sequence program for the sequence, **characterized in that** the sequence program selection option is embodied by a rotatable selector switch with start function, or comprises an acoustic selection option.

2. Programmable sequence controller according to claim 1, **characterized in that** the tapping points are water tapping points.

3. Programmable sequence controller according to one of the preceding claims, **characterized in that** the display is designed to initially display titles (2) of selectable sequence programs visually and/or acoustically, and after the start of a selected sequence program, to display the respective sequence step with corresponding title (3) visually and/or acoustically.

4. Programmable sequence controller according to one of the preceding claims, **characterized in that** the control panel for inputs and for configuring and editing the selectable sequence programs is a touch input screen.

5. Programmable sequence controller according to one of the preceding claims, **characterized in that** the sensors connectable to interfaces of the control unit are pressure sensors, temperature sensors or flow sensors in feed lines or proximity sensors.

6. Programmable sequence controller according to any of the preceding claims, **characterized in that** the actuators connectable to interfaces of the control unit for actuation are actuators of valves or switches of pumps in supply lines, or switches of peripheral devices.

7. A programmable sequence controller according to claim 6, **characterized in that** the valves are shut-off valves, control valves, flow control valves or mixing valves, mixing valves preferably being controllable to a set temperature of the liquid medium specified in a module box.

8. Method for configuring a programmable sequence controller according to one of claims 1 to 7, **characterized in that,** when configuring a sequence program in the modular programming interface, as many module boxes (1) are created one after the other from a template, defined with parameters and lined up, as are required sequence steps subdivided in time or according to other criteria to represent a complete sequence.

9. Method according to claim 8, **characterized in that** the template for the individual module boxes (1) comprises a header part (4) and a parameter field (5), and a title (3) for the respective sequence step is entered in the header part (4) in the individual module boxes (1) created, and the parameters necessary for defining and controlling the respective sequence step are selected and specified in the parameter field (5).

10. Use of a programmable sequence controller according to any one of claims 1 to 7 for the control of sequences or scenes with successive sequence steps at tapping points, preferably for water tapping points and related operations in their environment.

11. Use according to claim 10, **characterized in that** the procedures or scenes are selected from the group consisting of tooth brushing, showering, bathing, hand washing and hand hygiene procedures.

## Revendications

1. Commande séquentielle programmable pour des points de prélèvement et des appareils périphériques associés pour la commande de déroulements avec des étapes de déroulement individuelles avec une distribution commandée et/ou régulée de milieux liquides, comprenant une unité de contrôle pour le traitement de données et pour la mémorisation et l'exécution de programmes de déroulement sélectionnables, avec un affichage et une possibilité de sélection de programme de déroulement et un panneau de commande pour les entrées, ainsi que des interfaces pour des capteurs et des interfaces pour la commande d'organes de réglage pouvant être reliés à l'unité de contrôle, la commande de déroulement présentant, pour la configuration et l'édition des programmes de déroulement sélectionnables, une interface de programmation modulaire avec des cases de module (1) pour les différentes étapes de déroulement, dans laquelle, par l'intermédiaire du panneau de commande, des réglages et des critères pour le point de prélèvement concerné et des appareils périphériques associés ainsi que des propriétés souhaitées du milieu liquide à distribuer ou des pauses lors de la distribution peuvent être saisis pour chaque étape de déroulement dans une case de module (1) correspondante et les étapes de déroulement peuvent être alignées sous la forme des cases de module (1) correspondantes pour former un programme de déroulement pour le déroulement, **caractérisé en ce que** la possibilité de sélection du programme de déroulement est matérialisée par un commutateur de sélection rotatif avec fonction de démarrage, ou comprend une possibilité de sélection acoustique.

2. Commande séquentielle programmable selon la revendication 1, **caractérisée en ce que** les points de prélèvement sont des points de prélèvement d'eau.

3. Commande séquentielle programmable selon l'une des revendications précédentes, **caractérisée en ce que** l'affichage est conçu pour afficher d'abord de manière optique et/ou acoustique des titres (2) de programmes séquentiels sélectionnables, et pour afficher de manière optique et/ou acoustique l'étape séquentielle respective avec le titre (3) correspondant après le démarrage d'un programme séquentiel sélectionné.

4. Commande séquentielle programmable selon l'une des revendications précédentes, **caractérisé en ce que** le panneau de commande pour les entrées ainsi que pour la configuration et l'édition des programmes séquentiels sélectionnables est un écran à entrée tactile.

5. Commande séquentielle programmable selon l'une des revendications précédentes, **caractérisée en ce que** les capteurs qui peuvent être raccordés à des interfaces de l'unité de contrôle sont des capteurs de pression, des capteurs de température ou des capteurs de débit dans des conduites d'alimentation ou des capteurs de proximité.

6. Commande séquentielle programmable selon l'une des revendications précédentes, **caractérisée en ce que** les actionneurs qui peuvent être reliés à des interfaces de l'unité de contrôle pour la commande sont des actionneurs de vannes ou des commutateurs de pompes dans des conduites d'alimentation, ou des commutateurs d'appareils périphériques.

7. Commande séquentielle programmable selon la revendication 6, **caractérisée en ce que** les vannes sont des vannes d'arrêt, des vannes de commande, des vannes de régulation de débit ou des vannes de mélange, les vannes de mélange étant de préférence réglables à une température de consigne du milieu liquide spécifiée dans une case de module.

8. Procédé de configuration d'une commande séquentielle programmable selon l'une des revendications 1 à 7, **caractérisé en ce que,** lors de la configuration d'un programme séquentiel dans l'interface de programmation modulaire, on crée autant de cases de module (1) respectivement l'une après l'autre à partir d'un modèle, on les définit avec des paramètres et on les aligne les unes à la suite des autres que d'étapes séquentielles subdivisées dans le temps ou selon d'autres critères sont nécessaires pour reproduire un déroulement complet.

9. Procédé selon la revendication 8, **caractérisé en ce que** le modèle pour les différentes cases de module (1) comprend une partie d'en-tête (4) et un champ de paramètres (5), et dans les différentes cases de module (1) créées, un titre (3) est inscrit dans la partie d'en-tête (4) pour l'étape de déroulement respective, et dans le champ de paramètres (5), les paramètres nécessaires pour définir et commander l'étape de déroulement respective sont sélectionnés et spécifiés.

10. Utilisation d'une commande séquentielle programmable selon l'une des revendications 1 à 7 pour la commande de déroulements ou de scènes avec des étapes de déroulement successives pour des points de prélèvement, de préférence pour des points de prélèvement d'eau et des opérations associées dans leur environnement.

11. Utilisation selon la revendication 10, **caractérisée en ce que** les procédures ou scènes sont choisies dans le groupe constitué par le brossage des dents, la douche, le bain, le lavage des mains et les procédures d'hygiène des mains.
